**Europäisches Patentamt**

**European Patent Office**

**Office européen des brevets**

(11) Veröffentlichungsnummer : **0 394 269 B1**

(12)

# EUROPÄISCHE PATENTSCHRIFT

(45) Veröffentlichungstag der Patentschrift :
**22.07.92 Patentblatt 92/30**

(51) Int. Cl.$^5$ : **F16B 13/04**

(21) Anmeldenummer : **88907109.8**

(22) Anmeldetag : **04.08.88**

(86) Internationale Anmeldenummer :
**PCT/DE88/00480**

(87) Internationale Veröffentlichungsnummer :
**WO 89/02036 09.03.89 Gazette 89/06**

(54) **SCHLAGANKER.**

(30) Priorität : **02.09.87 DE 3729330**

(43) Veröffentlichungstag der Anmeldung :
**31.10.90 Patentblatt 90/44**

(45) Bekanntmachung des Hinweises auf die
Patenterteilung :
**22.07.92 Patentblatt 92/30**

(84) Benannte Vertragsstaaten :
**AT BE CH DE FR GB IT LI LU NL SE**

(56) Entgegenhaltungen :
**EP-A- 0 249 731**
**DE-A- 2 652 630**
**FR-A- 1 264 205**
**US-A- 4 073 212**
**US-A- 4 475 329**

(73) Patentinhaber : **UPAT GMBH & CO**
**Freiburger Strasse 9**
**W-7830 Emmendingen (DE)**

(72) Erfinder : **FRISCHMANN, Albert**
**Hürnheimweg 3**
**W-7832 Kenzingen (DE)**
Erfinder : **RINKLAKE, Manfred**
**Grundackerstrasse 6**
**W-7830 Emmendingen 14 (DE)**
Erfinder : **BERNAUER, Erich**
**Bertastrasse 16**
**W-7887 Laufenburg-Hochsal (DE)**

(74) Vertreter : **Rackette, Karl, Dipl.-Phys. Dr.-Ing**
**Kaiser-Joseph-Strasse 179 Postfach 1310**
**W-7800 Freiburg (DE)**

**Beschreibung**

Die Erfindung betrifft einen Schlaganker mit einem Schaft, der an seinem vorderen Ende in einen axial geschlitzten Spreizbereich mit mehreren Spreizschenkeln übergeht, die durch einen in den Spreizbereich eintreibbaren Spreizkörper aufweitbar sind, der einen radial nach außen verformbaren Kragen aufweist, der am hinteren Ende eines den Spreizkörper verlängernden zylindrischen Zapfens mit einer sich axial erstreckenden Ausnehmung vorgesehen ist und dar nach seiner Verformung in einen umlaufenden Ringwulst den Spreizkörper gegen axiales Verschieben im Spreizbereich sichert, wobei der zylindrische Zapfen des Spreizkörpers in einem zylindrischen Führungsabschnitt des Schaftes mit einer radialen Ringschulter geführt ist, deren Innendurchmesser im wesentlichen dem Zapfendurchmesser entspricht.

Ein derartiger Schlaganker ist in der EP-A-0 249 731 beschrieben und verfügt über einen Spreizkörper mit einer sich axial erstreckenden Ausnehmung, in der ein Keil eingesetzt ist. Beim Auftreiben des bekannten Spreizankers auf dem am Bohrlochgrund aufsitzenden und mit einem Spreizkonus versehenen Spreizkörper werden die Spreizschenkel über den Spreizkonus in eine Hinterschneidung des Bohrloches eingebogen und bilden in der Hinterschneidung zusammen mit den Spreizkörper einen Formschluß. Während des Eintreibvorganges bewegt sich der zylindrische Zapfen mit der axialen Ausnehmung durch einen zylindrischen Führungsabschnitt des Schaftes mit einer radialen Ringschulter. Bevor die Aufspreizung endgültig ist, stößt der Keil an die Stirnseite des in eine Innenbohrung des Spreizankers hineinragenden Einschlagwerkzeuges an, so daß beim letzten Teilstück des Auftreibvorganges gleichzeitig auch der Keil in die axiale Ausnehmung des zylindrischen Zapfens eingetrieben wird. Der Keil weitet dabei das Ende des zylindrischen Zapfens so weit auf, daß der Spreizkörper mit dem Schlaganker nietartigfest verbunden wird.

Der Erfindung liegt die Aufgabe zugrunde, einen Schlaganker der eingangs genannten Art zu schaffen, bei dem ein zuverlässiges Festklemmen des Spreizkörpers im Schlaganker auf einfache Weise erreicht wird.

Diese Aufgabe wird erfindungsgemäß dadurch gelöst, daß der Ringschulter am Schaft ein Vernietungsring zugeordnet ist, dessen Innendurchmesser kleiner als der Durchmesser des zylindrischen Zapfens und kleiner als der Innendurchmesser der Ringschulter ist, so daß er beim Einschlagen des Schlagankers gegen den Kragen zur Anlage kommt und dessen Verformung herbeiführt.

Durch die Verwendung der Ringschulter am Schaft zusammen mit einem Vernietungsring, dessen Innendurchmesser kleiner als der Durchmesser des zylindrischen Zapfens und der Ringschulter ist, wird auf einfache Weise eine sichere Verformung und Erzeugung einer unlaufenden Ringwulst gewährleistet, so daß sich ein zuverlässiges Festklemmen des Spreizkörpers in Schlaganker mühelos ergibt.

Weitere Ausgestaltungen und zweckmäßige Weiterbildungen der Erfindung sind Gegenstand von Unteransprüchen.

Nachfolgend wird die Erfindung anhand der Zeichnung näher beschrieben. Es zeigen:

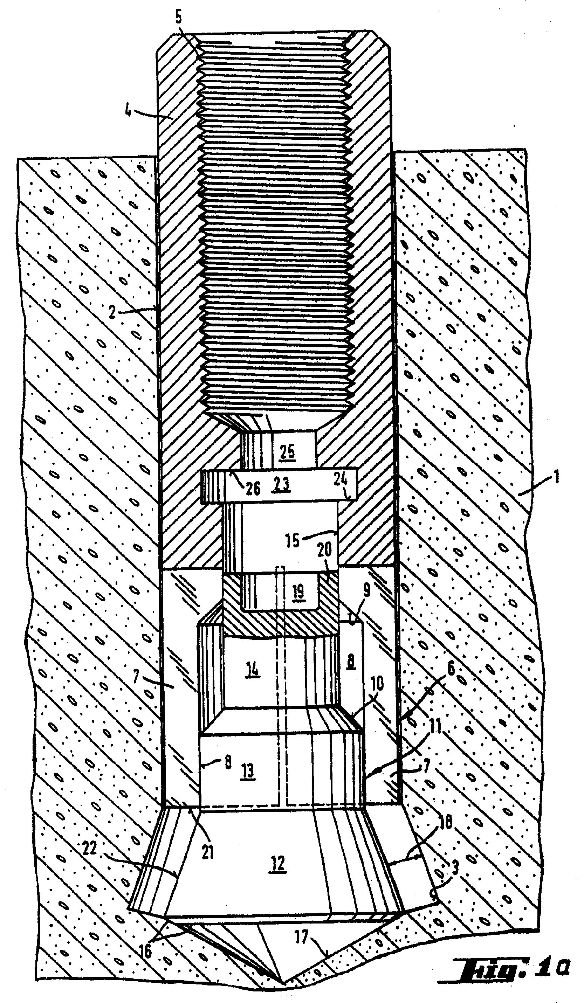

Fig. 1a einen aus Stahl herstellbaren Schlaganker gemäß der Erfindung in einen Vertikalschnitt vor dem Vernieten des Kragens und

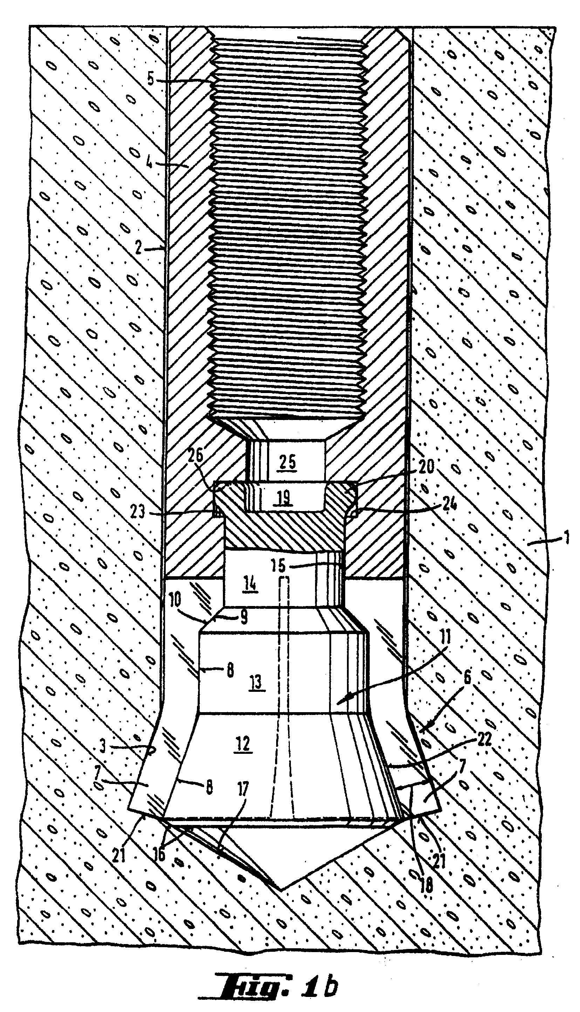

Fig. 1b einen aus Stahl herstellbaren Schlaganker gemäß der Erfindung in einem Vertikalschnitt nach dem Vernieten des Kragens.

In der Fig. 1a ist ein Schlaganker zu Beginn des Einschlagvorganges und in Fig. 1b am Ende des Einschlag- oder Setzvorganges dargestellt. Im Befestigungsmaterial 1 wird vor dem Einsetzen des Schlagankers eine Bohrung 2 eingebracht, die im Bohrlochtiefsten einen konischen Hinterschnitt 3 aufweist. Die Tiefe der Bohrung 2 und die axiale Ausdehnung sowie der Konuswinkel des Hinterschnittes 3 sind auf die Abmessungen der verschiedenen Teile des Schlagankers abgestimmt.

Der aus Stahl herstellbare Schlaganker gemäß Fig. 1a und 1b verfügt über einen Schaftteil 4, der mit einem Innengewinde 5 zum Einschrauben einer Befestigungsschraube oder mit einem Außengewinde zum Aufschrauben einer Mutter versehen sein kann. Unabhängig davon, ob der Schaftteil 4 als Außengewindebolzen oder als Innengewindehülse ausgebildet ist, verfügt der Schlaganker an seinem vorderen ende über einen Spreizbereich 6 mit mehreren Längsschlitzen, durch die Spreizschenkel 7 gebildet sind, die bei dem gezeichneten Ausführungsbeispiel über den größten Teil ihrer Längen konstante Wandstärken aufweisen. Der von den Spreizschenkeln 7 radial umschlossene Spreizraum 8 hat somit zunächst im wesentlichen eine zylinderförmige Gestalt. Im Wurzelbereich der Spreizschenkel 7 verringert sich der Durchmesser des Spreizraumes 8, wodurch eine Schaftanschlagschräge 9 gebildet wird, gegen die eine Spreizkörperanschlagschräge 10 eines Spreizkörpers 11 zur Anlage kommt, wenn der Spreizkörper 11 bis in die in Fig, 1b dargestellte Endstellung gelangt. Dann wird der untere Teil des Spreizraumes 8 konisch aufgeweitet.

Der Spreizkörper 11 verfügt über einen sich nach vorne erweiternden Spreizkonus 12, der in einen zylindrischen Bund 13 übergeht. Der Durchmesser des zylindrischen Bundes 13 ist gleich dem oder nur geringfügig größer als der burchmesser des Spreizraumes 8, so daß es möglich ist, zur Vorkomplettierung des Spreizankers den Spreizkörper 11 zwischen die Spreizschenkel 7 einzuklemmen. Der zylindrische Bund 13 geht über die Spreizkörperanschlagschräge 10 in einen zylindrischen Zapfen 14 über, dessen Durchmesser etwas kleiner als der Durchmesser des zylindrischen Bundes 13 ist. In der Nähe der Wurzeln der Spreizschenkel 7 ist im Schlaganker ein zylindrischer Führungsabschnitt 15 vorgesehen, dessen Durchmesser im wesentlichen den Durchmesser des zylindrischen Zapfens 14 entspricht und diesen gleitend führt.

Wenn der mit dem Spreizkörper 11 vorkomplettierte Schlaganker in die Bohrung 2 eingetrieben wird, gelangt der Spreizkonus 12 mit seiner Stirnfläche 16 gegen den Bohrlochgrund 17 zur Anlage. Um den Mantel des Spreizkonus 12 erstreckt sich infolge des konischen Hinterschnitts 3 ein konischer Ringraum 18 (Fig. 1a).

Der zylindrische Zapfen 14 ragt mit seinem hinteren Ende in den zylindrischen Führungsabschnitt 15 hinein. Wie man in Fig. 1a erkennen kann, ist an hinteren Ende des zylindrischen Zapfens 14 eine rotationssymmetrische Ausnehmung 19 vorhanden, so daß ein Rohrstutzen oder Kragen 20 gebildet ist.

Beim Eintreiben des Schaftteils 4 in Richtung auf den Bohrlochgrund 17 wird der Spreizkörper 11 durch den zylindrischen bund 13 und den zylindrischen Führungsabschnitt 15 geführt und zunächst so weit in den Spreizraum 8 eingetrieben, bis die vorderen Enden 21 der Spreizschenkel 7 gegen den Konusmantel 22 zur Anlage kommen. Beim weiteren Eintreiben erfolgt daher ein Aufspreizen der Spreizschenkel 7 in den konischen Ringraum 18, wobei der Kragen 20 durch den zylindrischen Führungsabschnitt 15 in eine Nietkammer 23 gelangt, deren Durchmesser größer als der Durchmesser des zylindrischen Führurgsabschnitts 15 ist, so daß auf der von den Spreizschenkeln 7 wegweisenden Seite eine umlaufende Schulter 24 gebildet ist.

Die Nietkammer 23 hat im wesentlichen eine zylindrische Gestalt und ist an dem der Schulter 24 gegenüberliegenden Ende entweder geschlossen oder insbesondere, wenn der Schaftteil 4 als Innengewindehülse ausgebildet ist, mit einer Kontrollbohrung 25 versehen, deren Durchmesser kleiner als der Durchmesser des Kragens 20 des Spreizkörpers 11 ist, so daß beim Eintreiben des Schlagankers vor dem völligen Aufspreizen der Spreizschenkel 7 ein Anschlagen der Rückwand 26 der Nietkammer 23 gegen das im Querschnitt rohrförmige Ende des Kragens 20 erfolgt. Wenn ausgehend von dieser, in der Zeichnung nicht dargestellten Zwischenposition ein weiteres Vortreiben des Schaftteils 4 erfolgt, wird gleichzeitig mit einem weiteren Aufspreizen der Spreizschenkel 7 ein Verformen des rohrförmigen Kragens 20 in der in der Fig. 1b dargestellten Weise bewirkt. Diese Verformung führt zu einer Umbördelung oder Vernietung des Kragens 20 in der Nietkammer 23. Wenn die Spreizkörperanschlagschräge 10 mit der Schaftanschlagschräge 9 in Berührung kommt, hat der Kragen 20 die in Fig. 1b dargestellte Durchmesservergrößerung erfahren. Infolge dieser Vernietung und der umlaufenden Schulter 24 ist somit eine Selbstsicherung des Spreizkörpers 11 verwirklicht, der durch die umlaufende Schulter 24 und den gestauchten Kragen 20 gehindert ist, aus dem Spreizraum 8 infolge von Erschütterungen oder sonstigen Einwirkungen herauszufallen.

Abweichend von dem in den Figuren 1a und 1b dargestellten Ausführungsbeispiel, bei dem die Spreizschenkel 7 über den größten Teil ihrer Längen konstante Wandstärken aufweisen, kann die Anordnung so getroffen sein, daß die Spreizschenkel in einer in der Zeichnung nicht dargestellten Weise ausgehend von ihren Wurzeln eine zunehmende Wandstärke haben, so daß sie einen sich nach vorne konisch verjüngenden Spreizraum umschließen. In einem derartigen Fall ist der Spreizkörper als sich vorne verjüngender Konus ausgebildet, wobei der Spreizkörper entweder als glatter Konus oder als konischer Spreizkörper mit mehreren zylindrischen abschnitten versehen sein kann, deren Durchmesser zum vorderen Ende hin jeweils abnehmen.

**Patentansprüche**

1. Schlaganker mit einem Schaft (4), der an seinem vorderen Ende in einen axial geschlitzten Spreizbereich (6) mit mehreren Spreizschenkeln (7) übergeht, die durch einen in den Spreizbereich (6) eintreibbaren Spreizkörper (11) aufweitbar sind, der einen radial nach außen verformbaren Kragen (20) aufweist, der am hinteren Ende eines den Spreizkörper (11) verlängernden zylindrischen Zapfens (14) mit einer sich axial erstreckenden Ausnehmung (19) vorgesehen ist und der nach seiner Verformung in einen umlaufenden Ringwulst den Spreizkörper (11) gegen axiales Verschieben im Spreizbereich (6) sichert, wobei der zylindrische Zapfen (14) des Spreizkörpers (11) in einem zylindrischen Führungsabschnitt (15) des Schaftes (4) mit einer radialen Ringschulter (24) geführt ist, deren Innendurchmesser im wesentlichen dem Zapfendurchmesser entspricht, **dadurch gekennzeichnet**, daß der Ringschulter (24) am Schaft (4) ein Vernietungsring (26) zugeordnet ist, dessen Innendurchmesser kleiner als der Durchmesser des zylindrischen Zapfens (14) und kleiner als der Innendurchmesser der Ringschulter (24) ist, so daß er beim Einschlagen des Schlagankers gegen den Kragen (20) zur Anlage kommt und dessen Verformung herbeiführt.

2. Schlaganker nach Anspruch 1, **dadurch gekennzeichnet,** daß der Zapfen (14) über einen zylindrischen Bund (13) mit dem sich nach vorne erweiternden Spreizkonus (12) des Spreizkörpers (11) verbunden ist und daß am Übergang vom zylindrischen Bund (13) zum Zapfen (14) eine Spreizkörperanschlagschräge (10) vorgesehen ist, die bei voll eingetriebenem Spreizkörper (11) gegen eine zugeordnete Schaftanschlagschräge (9) im Bereich der Wurzeln der Spreizschenkel (7) anliegt.

3. Schlaganker nach Anspruch 1, **dadurch gekennzeichnet,** daß die Spreizschenkel (7) eine konstante Wandstärke aufweisen und der Spreizkörper (11) sich nach vorne konisch erweitert.

4. Schlaganker nach Anspruch 1, **dadurch gekennzeichnet,** daß die Wandstärke der Spreizschenkel zum vorderen Ende hin zunimmt.

5. Schlaganker nach Anspruch 4, **dadurch gekennzeichnet,** daß der Spreizkörper ein sich nach vorne verjüngender Konus ist.

6. Schlaganker nach Anspruch 5, **dadurch gekennzeichnet,** daß der Spreizkörper mehrere zylindrische Abschnitte aufweist, deren Durchmesser zum vorderen Ende hin jeweils abnehmen.

## Claims

1. A hammer-in anchor comprising a shank (4) which at its front end goes into an axially slit spreading region (6) with a plurality of spreading limbs (7) which are expansible by a spreading body (11) which can be driven into the spreading region (6) and which has a radially outwardly deformable collar (20) which is provided at the rear end of a cylindrical projection (14) which extends the spreading body (11) and which has an axially extending recess (19), the collar (20), after being deformed into a peripherally extending annular bead, secures the spreading body (11) to prevent axial displacement thereof in the spreading region (6), wherein the cylindrical projection (14) of the spreading body (11) is guided in a cylindrical guide portion (15) of the shank (4) with a radial annular shoulder (24), the inside diameter of which substantially corresponds to the diameter of the projection, **characterised in that** associated with the annular shoulder (24) on the shank (4) is a riveting ring (26), the inside diameter of which is smaller than the diameter of the cylindrical projection (14) and smaller than the diameter of the annular shoulder (24) so that when the anchor is driven in the riveting ring comes to bear against the collar (20) and causes deformation thereof.

2. An anchor according to claim 1 **characterised in that** the projection (14) is connected by way of a cylindrical shoulder (13) to the forwardly enlarging spreading cone (12) of the spreading body (11) and that provided at the transition from the cylindrical shoulder (13) to the projection (14) is a spreading body abutment bevel (10) which, when the spreading body (11) is fully driven in, bears against an associated shank abutment bevel (9) in the region of the roots of the spreading limbs (7).

3. An anchor according to claim 1 **characterised in that** the spreading limbs (7) are of a constant wall thickness and the spreading body (11) enlarges conically forwardly.

4. An anchor according to claim 1 **characterised in that** the wall thickness of the spreading limbs increases towards the front end.

5. An anchor according to claim 4 **characterised in that** the spreading body is a forwardly tapering cone.

6. An anchor according to claim 5 **characterised in that** the spreading body has a plurality of cylindrical portions, the diameters of which respectively decrease towards the front end.

## Revendications

1. Dispositif de fixation expansible doté d'une tige (4) qui se prolonge à son extrémité antérieure en une zone expansible fendue axialement (6) avec plusieurs doigts d'écartement (7), qui peuvent être écartés par un corps d'écartement (11) enfonçable dans la zone expansible (6), qui présente une collerette (20) déformable radialement vers l'extérieur et prévue, à l'extrémité postérieure d'une partie cylindrique (14) prolongeant le corps d'écartement (11), avec un évidement axial (19), et qui empêche, une fois déformée en bourrelet périphérique, le corps d'écartement (11) de se déplacer axialement dans la zone expansible (6), la partie cylindrique (14) du corps d'écartement (11) étant guidée dans une portion de guidage cylindrique (15) de la tige (4) avec un épaulement annulaire radial (24), dont le diamètre interne correspond essentiellement au diamètre de la partie cylindrique, **caractérisé en ce que** l'épaulement annulaire (24) sur la tige (4) est doté d'une bague de rivetage (26), dont le diamètre interne est inférieur au diamètre de la partie cylindrique (14) et inférieur au diamètre interne de l'épaulement annulaire (24), de sorte que, lorsque l'on frappe sur le dispositif de fixation expansible, ledit épaulement annulaire entre en contact avec la collerette (20) et provoque sa déformation.

2. Dispositif de fixation expansible selon la revendication 1, **caractérisé en ce que** la partie cylindrique (14) est reliée par un collet cylindrique (13) au cône d'écartement (12) du corps d'écartement (11) s'évasant vers l'avant et en ce qu'à la transition entre le collet cylindrique (13) et la partie cylindrique (14) est prévu un chanfrein de butée de corps d'écartement (10), qui, lorsque le corps d'écartement (11) est entièrement enfoncé, repose contre un chanfrein de butée de tige correspondant (9) dans la région de naissance des doigts d'écartement (7).

3. Dispositif de fixation expansible selon la revendication 1, **caractérisé en ce que** les doigts d'écartement (7) présentent une épaisseur de paroi constante et en ce que le corps d'écartement (11) s'évase de façon conique vers l'avant.

4. Dispositif de fixation expansible selon la revendication 1, **caractérisé en ce que** l'épaisseur de paroi des doigts d'écartement augmente en direction de l'extrémité avant.

5. Dispositif de fixation expansible selon la revendication 4, **caractérisé en ce que** le corps d'écartement est un cône s'effilant vers l'avant.

6. Dispositif de fixation expansible selon la revendication 5, **caractérisé en ce que** le corps d'écartement présente plusieurs portions cylindriques, dont les diamètres respectifs diminuent en direction de l'extrémité avant.

**Fig. 1a**

*Fig. 1b*